# EUROPÄISCHE PATENTANMELDUNG

(11) **EP 2 963 780 A1**
(43) Veröffentlichungstag der Anmeldung: **06.01.2016**
(21) Anmeldenummer: 14175839.1
(22) Anmeldetag: 04.07.2014
(51) Int. Cl.: H02K 5/06, F16M 1/04, H02K 5/04

(54) **Gegossenes Gehäuse mit einem Versteifungselement**

(71) Anmelder: Siemens Aktiengesellschaft, 80333 München (DE)
(72) Erfinder: Kopp, Florian, 90556 Seukendorf (DE); Maidorn, Mischa, 91056 Erlangen (DE)

(57) **Zusammenfassung**

Die Erfindung betrifft ein gegossenes Gehäuse (1,100) für eine Maschine (40) mit einer Welle (2), insbesondere für eine elektrische Maschine (40) mit einer Welle (2), wobei das gegossene Gehäuse in einer axialen Richtung (101) aufeinanderfolgend einen ersten Bereich (31), einen zweiten Bereich (32,132) und einen dritten Bereich (33) aufweist, wobei das gegossene Gehäuse einen ersten Durchgang (27) für die Welle (2) und einen zweiten Durchgang (28) umfasst, wobei der erste Durchgang (27) einen ersten gegossenen Rand (37) und der zweite Durchgang (28) einen zweiten gegossenen Rand (38) aufweist, wobei der zweite Durchgang (28) ein Versteifungselement (34) aufweist, wobei das Versteifungselement (34) von einem ersten Verbindungspunkt (44) mit dem zweiten gegossenen Rand (38) zu einem gegenüberliegenden zweiten Verbindungspunkt (45) mit dem zweiten gegossenen Rand (38) verläuft, wobei der zweite gegossene Rand (38) an einem dritten Verbindungspunkt (46) eine erste Befestigungsvorrichtung (51) und an einem vierten Verbindungspunkt (47) eine zweite Befestigungsvorrichtung (52) aufweist, wobei der zweite Durchgang (28) eine Öffnung (17) in einer Wand (74) des gegossenen Gehäuses aufweist, wobei sich eine Projektion einer gedachten Verbindungslinie (53) zwischen dem dritten Verbindungspunkt (46) und dem vierten Verbindungspunkt (47) in die Öffnung (17) mit einer Projektion des Versteifungselement (34) in die Öffnung (17) kreuzt, eine Maschine (40), insbesondere elektrische Maschine (40) umfassend das gegossenes Gehäuse (1,100), ein Verfahren zur Herstellung des gegossenen Gehäuses (1,100), ein Verfahren zur Herstellung der Maschine (40), ein Verfahren für einen Service an der Maschine (40), sowie eine Verwendung eines weiteren Versteifungselementes (36) zu einem Versteifen des gegossenen Gehäuses (1,100).

## Beschreibung

Die Erfindung betrifft ein gegossenes Gehäuse für eine Maschine mit einer Welle, insbesondere für eine elektrische Maschine mit einer Welle. Weiterhin betrifft die Erfindung eine Maschine mit einer Welle, insbesondere eine elektrische Maschine mit einer Welle, die das gegossene Gehäuse umfasst. Ferner betrifft die Erfindung ein Verfahren zur Herstellung des gegossenen Gehäuses, ein Verfahren zur Herstellung der Maschine mit der Welle, insbesondere der elektrischen Maschine mit der Welle, ein Verfahren für einen Service an der Maschine mit der Welle, insbesondere der elektrischen Maschine mit der Welle, sowie eine Verwendung eines weiteren Versteifungselements zum Versteifen des gegossenen Gehäuses.

Ein derartiges gegossenes Gehäuse ist aus der WO 2014/075281 A1 bekannt. In dieser Veröffentlichung umfasst das gegossene Gehäuse für große elektrische Motoren mit Verstärkungskomponenten zwei Stützabschnitte und einen Verbindungsabschnitt, der die zwei Stützabschnitte verbindet. Die zwei Stützabschnitte weisen jeweils einen Hohlraum auf, in dem eine Belüftungsöffnung vorhanden ist. Die zwei Stützabschnitte und der Verbindungsabschnitt haben Durchgänge, die miteinander verbunden sind. Die Verstärkungskomponenten mit Verstärkungsstrukturen sind in den Belüftungsöffnungen montiert. Unter anderem wird durch die in den Belüftungsöffnungen montierten Verstärkungskomponenten eine durch Vibrationen hervorgerufene Verformung der Belüftungsöffnungen reduziert. So wird die Festigkeit des gegossenen Gehäuses für große elektrische Motoren signifikant erhöht. Mit den Verstärkungskomponenten, die eine Verstärkungsstruktur aufweisen, wird ein gegossenes Gehäuse mit relativ dünnen Wänden und einfacher Struktur ohne Reduzierung der Festigkeit erreicht. Dies spart Kosten im Bereich von Material und Herstellung. In den Ausführungsbeispielen der WO 2014/075281 A1 werden Verstärkungskomponenten beschrieben, die einen Rahmen aufweisen, der in den Belüftungsöffnungen mittels einer Schraubenverbindung, einer Stiftverbindung, einer haftenden Verbindung oder einer Schrumpfpassung montiert ist. Der Rahmen gibt eine Rahmenöffnung vor, die durch die Verstärkungsstruktur in eine Mehrzahl von Teilöffnungen aufgeteilt ist. In den Ausführungsbeispielen der WO 2014/075281 A1 haben die Teilöffnungen eine polygonale oder triangulare Form.

Der Erfindung liegt die Aufgabe zugrunde, einen technischen Beitrag zu einem gegossenen Gehäuse für eine Maschine, insbesondere für eine elektrische Maschine, zu leisten, mit dem eine kostengünstig und in hoher Qualität mögliche Anpassung an eine mechanische Belastung durch einen Betrieb der Maschine, insbesondere der elektrischen Maschine, zur Verfügung gestellt wird.

Die Aufgabe wird durch ein gegossenes Gehäuse mit den Merkmalen des Anspruchs 1 gelöst.

Ein erfindungsgemäßes gegossenes Gehäuse für eine Maschine mit einer Welle, insbesondere für eine elektrische Maschine mit einer Welle
- weist in einer axialen Richtung aufeinanderfolgend einen ersten Bereich, einen zweiten Bereich und einen dritten Bereich auf,
- wobei das gegossene Gehäuse einen ersten Durchgang für die Welle und einen zweiten Durchgang umfasst,
- wobei der erste Durchgang einen ersten gegossenen Rand und der zweite Durchgang einen zweiten gegossenen Rand aufweist,
- wobei der zweite Durchgang ein Versteifungselement aufweist,
- wobei das Versteifungselement von einem ersten Verbindungspunkt mit dem zweiten gegossenen Rand zu einem gegenüberliegenden zweiten Verbindungspunkt mit dem zweiten gegossenen Rand verläuft,
- wobei der zweite gegossene Rand an einem dritten Verbindungspunkt eine erste Befestigungsvorrichtung und an einem viertem Verbindungspunkt eine zweite Befestigungsvorrichtung aufweist,
- wobei der zweite Durchgang eine Öffnung in einer Wand des gegossenen Gehäuses aufweist,
- wobei sich eine Projektion einer gedachten Verbindungslinie zwischen dem dritten Verbindungspunkt und dem vierten Verbindungspunkt in die Öffnung mit einer Projektion des Versteifungselements in die Öffnung kreuzt.

Die Aufgabe wird auch durch eine Maschine, insbesondere eine elektrische Maschine, mit den Merkmalen nach Anspruch 11 gelöst. Eine erfindungsgemäße Maschine, insbesondere eine erfindungsgemäße elektrische Maschine, umfasst ein erfindungsgemäßes gegossenes Gehäuse, wobei die Maschine, insbesondere die elektrische Maschine, die durch den ersten Durchgang verlaufende Welle umfasst, wobei an der Welle ein Rotor befestigt ist, und in dem zweiten Bereich des gegossenen Gehäuses ein Stator zum Zusammenwirken mit dem Rotor fixiert ist, wobei das gegossene Gehäuse das Versteifungselement, die erste Befestigungsvorrichtung und die zweite Befestigungsvorrichtung umfasst.

Die Aufgabe wird auch durch ein Verfahren zur Herstellung eines erfindungsgemäßen gegossenen Gehäuses mit den Merkmalen nach Anspruch 12 gelöst. Bei einem erfindungsgemäßen Verfahren zur Herstellung eines erfindungsgemäßen gegossenen Gehäuses wird das Gehäuse mit dem Versteifungselement, der ersten und der zweiten Befestigungsvorrichtung hergestellt.

Die Aufgabe wird auch durch ein Verfahren zur Herstellung einer erfindungsgemäßen Maschine mit einer Welle, insbesondere einer erfindungsgemäßen elektrischen Maschine mit einer Welle, nach Anspruch 13 gelöst. Bei dem Verfahren wird das gegossene Gehäuse, welches das Versteifungselement, die erste und die zweite Befestigungsvorrichtung umfasst, für einen Verfahrensschritt zur Herstellung der Maschine, insbesondere der elektrischen Maschine, bereitgestellt.

Die Aufgabe wird auch durch ein Verfahren für einen Service mit den Merkmalen nach Anspruch 14 gelöst. Bei einem erfindungsgemäßen Verfahren für einen Service an einer Maschine mit einer Welle, insbesondere an einer elektrische Maschine mit reiner Welle, und einem erfindungsgemäßen gegossenen Gehäuse wird ein weiteres Versteifungselement an der ersten und an der zweiten Befestigungsvorrichtung befestigt oder entfernt, wobei das gegossene Gehäuse das Versteifungselement, die erste und die zweite Befestigungsvorrichtung umfasst.

Ferner wird die Aufgabe durch eine Verwendung eines weiteren Versteifungselements mit den Merkmalen nach Anspruch 15 gelöst. Bei einer erfindungsgemäßen Verwendung eines weiteren Versteifungselements zu einem Versteifen eines erfindungsgemäßen gegossenen Gehäuses, insbesondere eines gegossenen Gehäuses einer erfindungsgemäßen Maschine, wird das weitere Versteifungselement an der ersten und an der zweiten Befestigungsvorrichtung befestigt, wobei das gegossene Gehäuse das Versteifungselement, die erste und die zweite Befestigungsvorrichtung umfasst.

Die Aufgabe wird erfindungsgemäß vorteilhaft gelöst, indem das gegossene Gehäuse bei einer Maschine mit einer Welle, insbesondere bei einer elektrischen Maschine mit einer Welle, in einem Betrieb in einer ersten Aufstellungsart einer mechanischen Belastung des Betriebs in der ersten Aufstellungsart vorteilhaft kostengünstig in einer hohen Qualität angepasst widerstehen kann. Hierzu umfasst das gegossene Gehäuse den ersten Durchgang mit dem ersten gegossenen Rand und den zweiten Durchgang mit dem zweiten gegossenen Rand, wobei der zweite Durchgang das Versteifungselement aufweist, das von dem ersten Verbindungspunkt mit dem zweiten gegossenen Rand zu dem gegenüberliegenden zweiten Verbindungspunkt mit dem zweiten gegossenen Rand verläuft, wobei der zweite gegossene Rand an dem dritten Verbindungspunkt die erste Befestigungsvorrichtung und an dem vierten Verbindungspunkt die zweite Befestigungsvorrichtung aufweist, der zweite Durchgang eine Öffnung in einer Wand des gegossenen Gehäuses aufweist, und sich eine Projektion einer gedachten Verbindungslinie zwischen dem dritten Verbindungspunkt und dem vierten Verbindungspunkt in die Öffnung mit einer Projektion des Versteifungselements in die Öffnung kreuzt. Vorteilhaft kostengünstig kann das gegossene Gehäuse durch eine Montage eines weiteren Versteifungselements an der ersten und zweiten Befestigungsvorrichtung in einer hohen Qualität an einer mechanischen Belastung durch einen Betrieb der Maschine, insbesondere der elektrischen Maschine, in einer zweiten Aufstellungsart angepasst widerstehen. Vorteilhaft kostengünstig kann in einer hohen Qualität für einen bestimmten Aufstellungsort mit seinen Randbedingungen die erste oder zweite Aufstellungsart genutzt werden. Eine Randbedingung kann die kostengünstige Nutzung des Raumes an einem bestimmten Aufstellungsort sein.

Die Projektionen erfolgen dabei auf eine gedachte Fläche, deren Rand der zweite gegossen Rand ist. Die Projektion der gedachten Verbindungslinie und des Versteifungselementes erfolgt in einer Richtung von innerhalb des gegossenen Gehäuses zu der Öffnung an die gedachte Fläche.

Vorteilhaft kreuzt sich die Projektion der gedachten Verbindungslinie mit der Projektion des Versteifungselements in einem spitzen Winkel. So kann vorteilhaft bei der zweiten Aufstellungsart eine Aufteilung der mechanischen Belastung auf das Versteifungselement und das weitere Versteifungselement in vorteilhafte Kraftkomponenten erfolgen, die geringere mechanische Anforderungen an das Versteifungselement und das weitere Versteifungselement stellen.

Vorteilhaft kann das gegossene Gehäuse eine erste Stützfläche zu einem Abstützen des gegossenen Gehäuses während eines Betriebes der Maschine, insbesondere einem Betrieb der elektrischen Maschine, in einer ersten Aufstellungsart aufweisen und eine zweite Stützfläche zu einem Abstützen des gegossenen Gehäuses während eines Betriebes der Maschine, insbesondere eines Betriebs der elektrischen Maschine, in einer zweiten Aufstellungsart aufweisen. Es kann so vorteilhaft kostengünstig in einer hohen Qualität durch die ersten Stützfläche und die zweiten Stützfläche an einem erfindungsgemäßen gegossenen Gehäuse das gegossene Gehäuse für die erste Aufstellungsart und für die zweite Aufstellungsart eingesetzt werden.

Eine erfindungsgemäße Maschine, insbesondere elektrische Maschine, weist den weiteren Vorteil auf, dass die Leistungsfähigkeit von Komponenten der erfindungsgemäßen Maschine, die sich innerhalb eines erfindungsgemäßen gegossenen Gehäuses befinden, in der ersten und in der zweiten Aufstellungsart in nahezu gleichem Umfang zu einer Abgabe oder Aufnahme von Energie an der Welle genutzt werden können. Vorteilhaft müssen für einen Betrieb einer erfindungsgemäßen Maschine in der zweiten Aufstellungsart weder die Komponenten in ihren Abmessungen wesentlich verkleinert werden, noch muss die Energieabgabe oder -aufnahme einer erfindungsgemäßen Maschine in der zweiten Aufstellungsart beschränkt werden, um eine Schädigung des gegossenen Gehäuses oder der Maschine zu befürchten oder gegen Sicherheitsbestimmungen zu verstoßen.

Bei einem Betrieb einer erfindungsgemäßen Maschine wird der Rotor in Drehung um eine Drehachse versetzt und es kann an der Welle, an der der Rotor befestigt ist, mechanische Energie an einen mechanischen Verbraucher in Form einer Drehbewegung abgegeben werden. Die dabei durch das Zusammenwirken des Stators mit dem Rotor auftretenden Kräfte führen zu Gegenkräften in dem Stator, der in dem gegossenen Gehäuse fixiert ist.

Bei einem Betrieb einer erfindungsgemäßen Maschine kann auch der Maschine mechanische Energie über die Welle zugeführt werden, die auch durch das Zusammenwirken des Stators mit dem Rotor zu entsprechenden Gegenkräften am Stator führt.

Die durch das Zusammenwirken auftretenden Kräfte führen in einem Betrieb einer erfindungsgemäßen Maschine zu einer mechanischen Belastung die erfindungsgemäß ein gegossenes Gehäuse vorteilhaft kostengünstig in einer hohen Qualität widerstehen kann.

Bei einer erfindungsgemäßen Maschine kann die Welle mithilfe einer ersten Lagervorrichtung und mithilfe einer zweiten Lagervorrichtung relativ zu einem erfindungsgemäßen gegossenen Gehäuse um eine Drehachse drehbar gelagert sein.

Ein erfindungsgemäßes Verfahren zur Herstellung eines erfindungsgemäßen gegossenen Gehäuses weist den weiteren Vorteil auf, dass ein erfindungsgemäßes gegossenes Gehäuse vorteilhaft kostengünstig in einer hohen Qualität vorteilhaft in hohen Stückzahlen hergestellt werden kann. Die hohen Stückzahlen ergeben sich mindestens aus der Summe der Stückzahlen für die erste und die zweite Aufstellungsart. Weiterhin vorteilhaft sind Werkzeuge, z.B. Formen für das Gießen des Gehäuses, nur für eine Ausführung des gegossenen Gehäuses notwendig, die sowohl für die erste als auch für die zweite Aufstellungsart verwendet werden kann.

Ein erfindungsgemäßes Verfahren zur Herstellung einer Maschine mit einer Welle, insbesondere einer elektrischen Maschine mit einer Welle, weist den weiteren Vorteil auf, dass für die erste und die zweite Aufstellungsart vorteilhaft dasselbe gegossene Gehäuse bereitgestellt werden kann. in hohem Maße die gleichen Komponenten verwendet werden können. So ist eine erfindungsgemäße Herstellung einer erfindungsgemäßen Maschine mit einer Welle, insbesondere einer erfindungsgemäßen elektrischen Maschine mit einer Welle, vorteilhaft kostengünstig in einer hohen Qualität möglich, da die Lagerhaltungskosten eine geringere Anhängigkeit von einen unterschiedlichen Bedarf an elektrischen Maschine in der ersten und in der zweiten Aufstellungsart aufweisen. Weiterhin ist eine erfindungsgemäße Herstellung einer erfindungsgemäßen Maschine mit einer Welle, insbesondere einer erfindungsgemäßen elektrischen Maschine mit einer Welle, vorteilhaft kostengünstig in einer hohen Qualität möglich, da die Lagerhaltungskosten für die Komponenten aufgrund der geringen Variation in den Komponenten geringer sind und auch die Gefahr des Verbauens einer falschen Komponente geringer ist.

Bei einem Service an einer Maschine, insbesondere einer elektrischen Maschine, werden Arbeiten an der Maschine, insbesondere der elektrischen Maschine im zeitlichen Abstand zu deren Herstellung durchgeführt.

Ein erfindungsgemäßes Verfahren für einen Service an einer Maschine mit einer Welle, insbesondere einer elektrischen Maschine mit einer Welle, weist den weiteren Vorteil auf, dass vorhandene erfindungsgemäße gegossene Gehäuse oder vorhandene erfindungsgemäße Maschinen vorteilhaft kostengünstig in einer hohen Qualität an eine Aufstellungsart angepasst werden können, wenn diese in einer anderen Aufstellungsart verwendet werden sollen, als ursprünglich vorgesehen war oder der Fall war.

Eine erfindungsgemäße Verwendung des weiteren Versteifungselements weist den weiteren Vorteil auf, dass ein vorhandenes erfindungsgemäßes gegossenes Gehäuse oder eine vorhandene erfindungsgemäße Maschine, insbesondere elektrische Maschine, in einfacher Weise nur durch ein Versteifungselement und dazugehörige Befestigungselemente vorteilhaft kostengünstig in einer hohen Qualität an eine Aufstellungsart angepasst werden kann.

Vorteilhafte Ausgestaltungen der Erfindung sind in den abhängigen Ansprüchen angegeben.

So ist eine Ausgestaltung eines erfindungsgemäßen gegossenen Gehäuses vorteilhaft, bei dem das Versteifungselement stoffschlüssig mit dem gegossenen Gehäuse verbunden ist. So können vorteilhaft kostengünstig in einer hohen Qualität das gegossene Gehäuse und das Versteifungselement in einem Stück gegossen werden. Vorteilhaft können hierbei kostengünstig ausgeprägte Kanten an dem Versteifungselement vermieden werden. Dies führt vorteilhaft zu einer hohen Qualität, da eine geringe Behinderung eines Kühlmittelstroms vorhanden ist, wenn der zweite Durchgang zur Kühlung der Maschine, insbesondere der elektrischen Maschine, mit einem Kühlmittelstrom verwendet wird. Vorteilhaft kann das Versteifungselement zwischen dem ersten und dem zweiten Verbindungspunkt nicht parallel zu der axialen Richtung verlaufen. So kann vorteilhaft bei einem Betrieb einer erfindungsgemäßen Maschine, insbesondere einer erfindungsgemäßen elektrischen Maschine, das Versteifungselement einer Belastung in der ersten und zweiten Aufstellart vorteilhaft widerstehen. Es kann so vorteilhaft erreicht werden, dass, das Versteifungselement bei Auftreten von Momenten um die Drehachse der Welle vorwiegend einer Zug-/Druck- statt einer reinen Schubbeanspruchung, und demzufolge einer reduzierten Biegebeanspruchung, ausgesetzt wird.

Das Versteifungselement kann eine Strebe sein. So kann das Versteifungselement vorteilhaft kostengünstig in einer hohen Qualität mit einem geringen Materialbedarf hergestellt werden und einen geringen Platzbedarf im zweiten Durchgang aufweisen.

Das Versteifungselement kann sich innerhalb des gegossenen Gehäuses innerhalb des zweiten Durchgangs befinden und kann in einer Richtung zu einer Öffnung des zweiten Durchgangs am gegossenen Gehäuse von der gedachten Verbindungslinie beabstandet sein. Vorteilhaft kostengünstig für eine erfindungsgemäße Herstellung und einen erfindungsgemäßen Service muss das gegossene Versteifungselement nicht montiert werden und kann vorteilhaft kostengünstig mit einem geringen Platzbedarf innerhalb des gegossenen Gehäuses im zweiten Durchgang vorhanden sein.

In einer weiteren vorteilhaften Ausgestaltung eines erfindungsgemäßen gegossenen Gehäuses verläuft ein weiteres Versteifungselement von dem dritten zu dem vierten Verbindungpunkt, wobei das weitere Versteifungselement an der ersten und der zweiten Befestigungsvorrichtung befestigt ist. Das weitere Versteifungselement kann so vorteilhaft eine Torsionssteifigkeit eines erfindungsgemäßen gegossenen Gehäuses für eine höhere mechanische Belastung vergrößern. Vorteilhaft kann das weitere Versteifungselement eine Strebe sein. Das weitere Versteifungselement kann so vorteilhaft kostengünstig in hoher Qualität mit einem geringen Materialbedarf hergestellt werden und mit einem geringen Platzbedarf an einem erfindungsgemäßen gegossenen Gehäuse vorhanden sein.

In einer weiteren vorteilhaften Ausgestaltung eines erfindungsgemäßen gegossenen Gehäuses kann ein weiteres Versteifungselement an der ersten und der zweiten Befestigungsvorrichtung formschlüssig fixiert sein. Vorteilhaft kann so kostengünstig in einer hohen Qualität eine hohe Torsionssteifigkeit bei dynamischer Belastung vorhanden sein. Die formschlüssige Fixierung bewirkt eine geringere relative Verschiebung des weiteren Versteifungselements relativ zu der ersten bzw. der zweiten Befestigungsvorrichtung bei einer dynamischen Belastung als beispielsweise eine Schraubenverbindung. Vorteilhaft kann das weitere Versteifungselement an der ersten und an der zweiten Befestigungsvorrichtung formschlüssig fixiert sein und dort mit Befestigungselementen befestigt sein. So kann vorteilhaft kostengünstig in hoher Qualität eine beständige Verbindung zwischen dem weiteren Versteifungselement und der ersten bzw. der zweiten Befestigungsvorrichtung vorhanden sein.

Bei einer weiteren vorteilhaften Ausgestaltung eines erfindungsgemäßen gegossenen Gehäuses sind die erste und die zweite Befestigungsvorrichtung stoffschlüssig mit dem gegossenen Gehäuse verbunden. So können vorteilhaft kostengünstig in einer hohen Qualität das gegossene Gehäuse, das Versteifungselement, die erste und die zweite Befestigungsvorrichtung in einem Stück gegossen werden.

Die erste und zweite Befestigungsvorrichtung kann bündig mit einer Außenfläche einer Wand des gegossenen Gehäuses abschließen. So kann vorteilhaft kostengünstig in einer hohen Qualität die erste und zweite Befestigungsvorrichtung für eine mögliche Anpassung an eine mechanische Belastung am gegossenen Gehäuse vorhanden sein. Unter anderem kann eine erfindungsgemäße Herstellung des gegossenen Gehäuses mit der ersten und zweiten Befestigungsvorrichtung kostengünstig in einer hohen Qualität erfolgen und bei einer erfindungsgemäßen Maschine, insbesondere elektrischer Maschine, einem erfindungsgemäßen Verfahren für einen Service oder eine erfindungsgemäße Verwendung des weiteren Versteifungselementes kann das weitere Versteifungselement platzsparend und einfach vorteilhaft kostengünstig in einer hohen Qualität an der ersten und zweiten Befestigungsvorrichtung befestigt werden oder sein.

Das gegossene Gehäuse kann an der ersten und zweiten Befestigungsvorrichtung kreisförmige Ausnehmungen aufweisen, die zum Befestigen des weiteren Versteifungselementes als Vorgabe der Lage der Bohrungen für die Befestigung dienen. So kann vorteilhaft kostengünstig in einer hohen Qualität die Lage der Bohrungen zum Befestigen des weiteren Versteifungselementes vorgegeben werden ohne diese schon bei einer erfindungsgemäßen Herstellung des gegossenen Gehäuses bohren zu müssen.

Die erste und die zweite Befestigungsvorrichtung können eine Bohrung mit einem Gewinde aufweisen. So kann das weitere Versteifungselement vorteilhaft kostengünstig in hoher Qualität zu einer Anpassung an eine mechanische Belastung des gegossenen Gehäuses befestigt werden.

In einer weiteren vorteilhaften Ausgestaltung eines erfindungsgemäßen gegossenen Gehäuses verläuft ein zweites Versteifungselement von einem fünften Verbindungspunkt mit dem zweiten gegossenen Rand zu einem gegenüberliegenden sechsten Verbindungspunkt mit dem zweiten gegossenen Rand, wobei der zweite gegossene Rand an einem siebten Verbindungspunkt eine dritte Befestigungsvorrichtung und an einem achten Verbindungspunkt eine vierte Befestigungsvorrichtung aufweist, wobei sich eine Projektion einer zweiten gedachten Verbindungslinie zwischen dem siebten und dem achten Verbindungspunkt in die Öffnung mit einer Projektion des zweiten Versteifungselements in die Öffnung kreuzt, wobei das Versteifungselement und die zweite gedachte Verbindungslinie in zueinander ähnlichen Richtungen orientiert sind und das zweite Versteifungselement und die gedachte Verbindungslinie in zueinander ähnlichen Richtungen orientiert sind. So kann vorteilhaft kostengünstig in einer hohen Qualität eine hohe mechanische Belastung eines erfindungsgemäßen gegossenen Gehäuses, insbesondere in einem Betrieb in der zweiten Aufstellungsart, mit einer geringen Schädigungswahrscheinlichkeit für das gegossene Gehäuse erreicht werden. Die Projektionen erfolgen auch in dieser vorteilhaften Ausgestaltung in der Richtung von innerhalb des gegossenen Gehäuses zu der Öffnung an die gedachte Fläche.

Das weitere Versteifungselement kann vorteilhaft eine höhere Festigkeit als das gegossene Material des gegossenen Gehäuses aufweisen. So kann vorteilhaft durch das weitere Versteifungselement mit der zu dem zweiten Versteifungselement ähnlich orientierten Richtung, die Wahrscheinlichkeit einer mechanischen Überlastung bis zum Bruch des zweiten Versteifungselementes sehr gering sein. Bei der vorteilhaften Kräfteaufteilung auf das weitere Versteifungselement und das zweite Versteifungselement übernimmt vorteilhaft kostengünstig bei einer erhöhten mechanischen Belastung des zweiten Versteifungselementes das weitere Versteifungselement einen größeren Kraftanteil im Vergleich zu dem Kraftanteil des zweiten Versteifungselementes. Dies kann vorteilhaft dadurch erfolgen, dass das zweite Versteifungselement eine stärkere Dehnung oder Stauchung unter Krafteinwirkung erfährt als das weitere Versteifungselement.

Weiterhin vorteilhaft kann durch ein zweites weiteres Versteifungselement, das von dem siebten Verbindungspunkt zu dem achten Verbindungspunkt verläuft und an dem dritten Befestigungsvorrichtung und an dem vierten Befestigungsvorrichtung befestigt ist, vorteilhaft kostengünstig in einer hohen Qualität mit den zwei gekreuzten Anordnungen für die zweite Aufstellungsart bzw. mit dem ersten und zweiten Versteifungselement für die erste Aufstellungsart eine angepasste homogene Verteilung einer Lasteinleitung der mechanischen Belastung in den zweiten gegossenen Rand erreicht werden.

In einer weiteren vorteilhaften Ausgestaltung eines erfindungsgemäßen gegossenen Gehäuses erstreckt sich eine Öffnung des zweiten Durchgangs am gegossenen Gehäuse in der axialen Richtung überwiegend innerhalb der ersten Stützfläche. So kann vorteilhaft kostengünstig in einer hohen Qualität eine mechanische Belastung in der ersten Aufstellungsart mit einer geringeren Schädigungswahrscheinlichkeit für ein erfindungsgemäßes gegossenes Gehäuse erreicht werden, ohne dass ein weiteres Versteifungselement notwendig ist.

Das gegossene Gehäuse kann die erste Stützfläche an dem ersten Bereich und eine weitere erste Stützfläche an dem dritten Bereich aufweisen. So können vorteilhaft kostengünstig in einer hohen Qualität Kräfte in einem Betrieb einer erfindungsgemäßen Maschine, insbesondere einer erfindungsgemäßen elektrischen Maschine, in der ersten Aufstellungsart in axialer Richtung verteilt am ersten Bereich über die erste Stützfläche und am dritten Bereich über die weitere erste Stützfläche abgestützt werden.

An der ersten und der zweiten Stützfläche können Stützvorrichtungen für die erste Aufstellungsart angebracht sein. So kann ein erfindungsgemäß gegossenes Gehäuse vorteilhaft kostengünstig in hoher Qualität an einen bestimmten Aufstellungsort angepasst werden.

In einer weiteren vorteilhaften Ausgestaltung eines erfindungsgemäßen gegossenen Gehäuses erstreckt sich eine Öffnung des zweiten Durchgangs am gegossenen Gehäuse in der axialen Richtung überwiegend zwischen einer zweiten Stützfläche und dem zweiten Bereich. Die zweite Stützfläche kann so vorteilhaft kostengünstig in einer hohen Qualität zum Abstützen für die zweite Aufstellungsart genutzt werden.

Das gegossene Gehäuse kann nur eine zweite Stützfläche zum Abstützen des gegossenen Gehäuses während eines Betriebs der Maschine, insbesondere der elektrischen Maschine, in der zweiten Aufstellungsart aufweisen. So kann sich ein erfindungsgemäßes gegossenes Gehäuse in der zweiten Aufstellungsart kostengünstig in einer hohen Qualität platzsparend nur an der zweiten Stützfläche abstützen. Hierzu kann vorteilhaft an der zweiten Stützfläche eine Stützvorrichtung für die zweite Aufstellungsart angebracht sein. Durch die Stützvorrichtung ist vorteilhaft kostengünstig eine Anpassung in hoher Qualität an einen bestimmten Aufstellungsort möglich.

In einer weiteren vorteilhaften Ausgestaltung eines erfindungsgemäßen gegossenen Gehäuses weist das gegossene Gehäuse die zweite Stützfläche an einer axialen Außenfläche einer axialen Wand des gegossenen Gehäuses auf. So kann vorteilhaft kostengünstig in der zweiten Aufstellungsart eine Befestigung in hoher Qualität an eine anzutreibende Vorrichtung oder, in einem Generatorbetrieb, an eine antreibende Vorrichtung platzsparend mit geringem Materialbedarf erfolgen. Vorteilhaft kann ein erfindungsgemäß gegossenes Gehäuse mit dem weiteren Versteifungselement hierzu der mechanischen Beanspruchung bei einer vertikalen Ausrichtung der Welle mit geringer Schädigungswahrscheinlichkeit standhalten. Die Bezeichnung axial steht dabei für die überwiegende Orientierung der Normalenvektoren an der axialen Außenfläche, die deren Ausrichtung bestimmt. Die axiale Außenfläche weist eine Öffnung des ersten Durchgangs für eine Welle auf, die sich in axialer Richtung durch die Öffnung erstrecken kann.

Vorteilhaft kostengünstig kann an der zweiten Stützfläche des gegossenen Gehäuses eine Stützvorrichtung mit einem Flansch angebracht sein.

In einer weiteren vorteilhaften Ausgestaltung eines erfindungsgemäßen gegossenen Gehäuses kann sich der zweite Durchgang in dem ersten Bereich befinden. Vorteilhaft kostengünstig kann sich bei einer mechanischen Beanspruchung in der ersten und zweiten Aufstellungsart der zweite Durchgang in einem großen Querschnitt zu einer großen Öffnung des gegossenen Gehäuses an dem ersten Bereich erstrecken. So kann der zweite Durchgang vorteilhaft für eine Kühlung der Maschine, insbesondere der elektrischen Maschine, für verschiedene Aufstellungs- und Ausführungsarten einer erfindungsgemäßen Maschine, insbesondere einer erfindungsgemäßen elektrischen Maschine, in hoher Qualität genutzt werden.

Der dritte Bereich kann einen dritten Durchgang mit einer Öffnung am gegossenen Gehäuse aufweisen. So kann vorteilhaft kostengünstig eine Ausführungsart einer erfindungsgemäßen Maschine, insbesondere einer erfindungsgemäßen elektrischen Maschine, zur Verfügung gestellt werden, bei der durch die Öffnung des zweiten Durchgangs ein Kühlmittel, insbesondere Luft, in eine erfindungsgemäße Maschine, insbesondere eine erfindungsgemäße elektrische Maschine, einströmen kann, den zweiten Bereich, insbesondere den Stator und/oder Rotor, kühlen kann, und über die Öffnung des dritten Durchgangs ausströmen kann. Vorteilhaft kostengünstig kann der dritte Durchgang einer mechanischen Belastung eines Betriebs in der ersten oder zweiten Aufstellungsart vorteilhaft kostengünstig in einer hohen Qualität erfindungsgemäß wie der zweite Durchgang mit dem Versteifungselement und, abhängig von der Aufstellungsart, mit dem weiteren Versteifungselement ausgeführt angepasst widerstehen.

Das gegossene Gehäuse kann einen weiteren Durchgang im zweiten Bereich mit einer Öffnung am gegossenen Gehäuse aufweisen. So kann vorteilhaft kostengünstig eine zweite Ausführungsart einer erfindungsgemäßen Maschine, insbesondere einer erfindungsgemäßen elektrischen Maschine, zur Verfügung gestellt werden, bei der durch die Öffnung des zweiten Durchgangs und des dritten Durchgangs ein Kühlmittel, insbesondere Luft, in eine erfindungsgemäße Maschine, insbesondere eine erfindungsgemäße elektrische Maschine, einströmen kann, den zweiten Bereich, insbesondere den Stator und/oder Rotor, kühlen kann, und über die Öffnung des weiteren Durchgangs ausströmen kann. Vorteilhaft kostengünstig können hierbei für die auftretenden mechanischen Belastungen Streben an der Öffnung des dritten Durchgangs befestigt sein, damit das gegossene Gehäuse in einer hohen Qualität den mechanischen Beanspruchungen standhält. Bei einer ersten Ausführungsart einer erfindungsgemäßen Maschine, insbesondere einer erfindungsgemäßen elektrischen Maschine, bei der das Kühlmittel durch die Öffnung des zweiten Durchgangs in das gegossene Gehäuse einströmt, und durch die Öffnung des dritten Durchgangs das gegossene Gehäuse verlässt, kann die Öffnung des dritten Durchgangs vorteilhaft kostengünstig in hoher Qualität durch eine Platte verschlossen werden.

Vorteilhafte Ausgestaltungen erfindungsgemäßer gegossener Gehäuse, erfindungsgemäßer Maschinen, erfindungsgemäßer elektrischer Maschinen, erfindungsgemäßer Verfahren zur Herstellung eines erfindungsgemäßen gegossenen Gehäuses, Maschinen oder elektrische Maschinen, erfindungsgemäße Verfahren für einen Service an einer Maschine, insbesondere an einer elektrischen Maschine, sowie erfindungsgemäße Verwendungen eines weiteren Versteifungselements ergeben sich vorteilhaft durch Kombination einiger oder mehrerer beschriebener Merkmale.

Die oben beschriebenen Eigenschaften, Merkmale und Vorteilen dieser Erfindung sowie die Art und Weise, wie diese erreicht werden, werden klarer und deutlicher verständlich im Zusammenhang mit der folgenden Beschreibung der Ausführungsbeispiele, die anhand der Figuren näher erläutert werden.

Es zeigen:
- FIG 1: ein Ausführungsbeispiel eines gegossenen Gehäuses,
- FIG 2: das Ausführungsbeispiel aus FIG 1 mit einem weiteren Versteifungselement, das von einem dritten zu einem vierten Verbindungspunkt verläuft,
- FIG 3: ein weiteres Ausführungsbeispiel eines gegossenen Gehäuses,
- FIG 4: einen Längsschnitt durch ein Ausführungsbeispiel einer Maschine in einer zweiten Ausführungsart mit dem gegossenen Gehäuse gemäß dem Ausführungsbeispiel nach FIG 3,
- FIG 5: eine Ansicht des Ausführungsbeispiel der Maschine gemäß FIG 4 mit einer vertikal orientierbaren Welle.

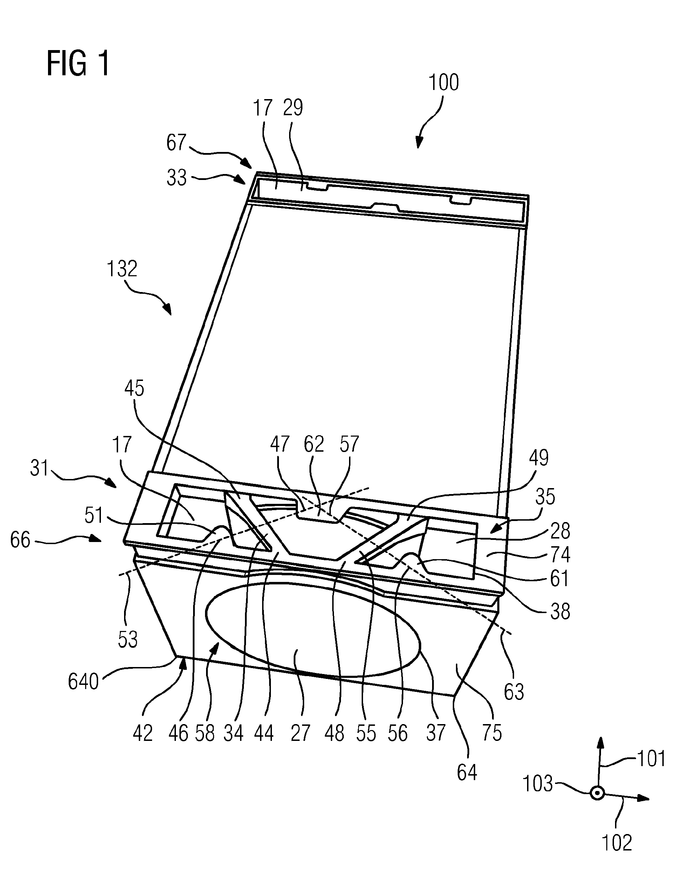

FIG 1 zeigt ein Ausführungsbeispiel eines gegossenen Gehäuses 100. Das gegossene Gehäuse 100 für eine Maschine 40 mit einer Welle 2, insbesondere für eine elektrische Maschine 40 mit einer Welle 2, weist in einer axialen Richtung 101 aufeinander folgend einen ersten Bereich 31, einen zweiten Bereich 132 und einen dritten Bereich 33 auf. Das gegossene Gehäuse 100 umfasst einen ersten Durchgang 27 für die Welle 2 und einen zweiten Durchgang 28, wobei der erste Durchgang 27 einen ersten gegossenen Rand 37 und der zweite Durchgang 28 einen zweiten gegossenen Rand 38 aufweisen. Der zweite Durchgang 28 weist ein Versteifungselement 34 auf, wobei dieses von einem ersten Verbindungspunkt 44 mit dem zweiten gegossenen Rand 38 zu einem gegenüberliegenden zweiten Verbindungspunkt 45 mit dem zweiten gegossenen Rand 38 verläuft. Der zweite gegossene Rand 38 weist an einem dritten Verbindungspunkt 46 eine erste Befestigungsvorrichtung 51 und an einem vierten Verbindungspunkt 47 eine zweite Befestigungsvorrichtung 52 auf. Der zweite Durchgang 28 weist eine Öffnung 17 in einer Wand 74 des gegossenen Gehäuses 100 auf. In dem Ausführungsbeispiel gemäß der FIG 1 weist die Wand 74 die Außenfläche 35 auf. Eine Projektion einer gedachten Verbindungslinie 53 zwischen dem dritten Verbindungspunkt 46 und dem vierten Verbindungspunkt 47 in die Öffnung 17 kreuzt sich mit einer Projektion des Versteifungselements 34 in die Öffnung 17. Die Projektionen erfolgen dabei auf eine gedachte Fläche, deren Rand der zweite gegossen Rand 38 ist. Die Projektion der gedachten Verbindungslinie 53 und des Versteifungselementes 34 erfolgt in einer Richtung 103 von innerhalb des gegossenen Gehäuses 100 zu der Öffnung 17 an die gedachte Fläche. In dem Ausführungsbeispiel der FIG 1 ist die Richtung 103 senkrecht zu der axialen Richtung 101 orientiert.

Das Versteifungselement 34 ist stoffschlüssig mit dem gegossenen Gehäuse 100 verbunden. Das gegossene Gehäuse 100 gemäß dem Ausführungsbeispiel der FIG 1 ist in einem Stück gegossen. Das gegossene Gehäuse 100 weist ein zweites Versteifungselement 55 auf, das stoffschlüssig mit dem gegossenen Gehäuse 100 verbunden ist. Das Versteifungselement 34 und das zweite Versteifungselement 55 verlaufen in dem zweiten Durchgang 28 diagonal in Richtung des zweiten Bereichs 132 voneinander weg. So kann vorteilhaft kostengünstig in einer hohen Qualität in einer ersten Aufstellungsart das gegossene Gehäuse 100 einer mechanischen Beanspruchung unabhängig von einer Drehrichtung der Welle um die axiale Richtung 101 im gleichen Maße widerstehen. Das gegossene Gehäuse 100 erstreckt sich in der axialen Richtung 101 von einem ersten axialen Ende 66 des gegossenen Gehäuses 100 zu einen zweiten axialen Ende 67 des gegossenen Gehäuses 100.

Das Versteifungselement 34 und das zweite Versteifungselement 55 befinden sich innerhalb des gegossenen Gehäuses 100 innerhalb des zweiten Durchgangs 28 und sind in der Richtung 103 zu einer Öffnung 17 des zweiten Durchgangs 28 am gegossenen Gehäuse 100 von der gedachten Verbindungslinie 53 und einer zweiten gedachten Verbindungslinie 63 beabstandet. Die erste Befestigungsvorrichtung 51 und die zweite Befestigungsvorrichtung 52 sind stoffschlüssig mit dem gegossenen Gehäuse 100 verbunden. Die erste Befestigungsvorrichtung 51 und die zweite Befestigungsvorrichtung 52 schließen bündig mit einer Außenfläche 35 des gegossenen Gehäuses 100 ab. Das zweite Versteifungselement 55 verläuft von einem fünften Verbindungspunkt 48 mit dem zweiten gegossenen Rand 38 zu einem gegenüberliegenden sechsten Verbindungspunkt 49 mit dem zweiten gegossenen Rand 38, wobei der zweite gegossene Rand 38 an einem siebten Verbindungspunkt 56 eine dritte Befestigungsvorrichtung 61 und an einem achten Verbindungspunkt 57 eine vierte Befestigungsvorrichtung 62 aufweist. Eine Projektion der zweiten gedachten Verbindungslinie 63 zwischen dem siebten Verbindungspunkt 56 und dem achten Verbindungspunkt 57 in die Öffnung 17 kreuzt sich mit einer Projektion des zweiten Versteifungselements 55 in die Öffnung 17, wobei das Versteifungselement 34 und die zweite gedachte Verbindungslinie 63 in zueinander ähnlichen Richtungen orientiert sind und das zweite Versteifungselement 55 und die gedachte Verbindungslinie 53 in zueinander ähnlichen Richtungen orientiert sind. Die Projektionen erfolgen auch hier in der Richtung 103 von innerhalb des gegossenen Gehäuses 100 zu der Öffnung 17 an die gedachte Fläche. Die Öffnung 17 des zweiten Durchgangs 28 am gegossenen Gehäuse 100 erstreckt sich in der axialen Richtung 101 überwiegend innerhalb einer ersten Stützfläche 42 des gegossenen Gehäuses 100.

Mit anderen Worten: Projiziert man die Öffnung 17 des zweiten Durchgangs 28 auf die erste Stützfläche 42, so schneidet die Öffnung 17 des zweiten Durchgangs 28 eine Fläche aus der ersten Stützfläche 42, wobei sich die Stützfläche, insbesondere in einer Richtung 102 senkrecht zu der axialen Richtung 101, nicht komplett von einem ersten Ende zu einem zweiten Ende des gegossenen Gehäuses 100 erstrecken muss, sondern dazwischen unterbrochen sein kann. So kann ein Ausführungsbeispiel eines gegossenen Gehäuses an dem ersten Ende 640 und an dem zweiten Ende 64 jeweils einen Fuß aufweisen, der das gegossene Gehäuse über eine gesamte Länge der Öffnung 17 des zweiten Durchgangs 28 in der axialen Richtung 101 abstützt und so die erste Stützfläche 42 bildet. Wenn sich die Öffnung 17 des zweiten Durchgangs 28 am gegossenen Gehäuse 100 in der axialen Richtung 101 innerhalb einer ersten Stützfläche 42 des gegossenen Gehäuses 100 erstreckt, bleibt zumindest in der axialen Richtung 101 ein Rand der ersten Stützfläche 42 stehen. Wenn sich die Öffnung 17 des zweiten Durchgangs 28 am gegossenen Gehäuse 100 in der axialen Richtung 101 überwiegend innerhalb einer ersten Stützfläche 42 des gegossenen Gehäuses 100 erstreckt, erstreckt sich die Öffnung 17 in der axialen Richtung 101 mit einem geringen axialen Überstand über die erste Stützfläche 42 hinaus. Dabei ist unter überwiegend zu verstehen, dass der axiale Überstand im Vergleich zu der Erstreckung der Öffnung 17 in der axialen Richtung 101 vernachlässigbar ist. Dies ist der Fall, wenn der axiale Überstand nicht zu einer beachtenswerten geringeren mechanischen Belastbarkeit des gegossenen Gehäuses 100 in dessen ersten Aufstellungsart führt als bei dem nahezu gleich ausgeführten gegossenen Gehäuse 100 ohne axialen Überstand. Die Öffnung 17 des zweiten Durchgangs 28 am gegossenen Gehäuse 100 erstreckt sich in der axialen Richtung überwiegend zwischen einer zweiten Stützfläche 58 und dem zweiten Bereich 132. Der zweite Durchgang 28 befindet sich in dem ersten Bereich 31. Vorteilhaft kostengünstig erstreckt sich bei einer mechanischen Beanspruchung in der ersten und zweiten Aufstellungsart der zweite Durchgang 28 in einem großen Querschnitt zu einer großen Öffnung 17 des gegossenen Gehäuses 100 an dem ersten Bereich 31. Die Öffnung 17 des zweiten Durchgangs 28 kann so nahezu den gesamten Bereich in einer Richtung 102 zwischen dem ersten Ende 640 und dem zweiten Ende 64 des gegossenen Gehäuses 100 einnehmen. Der dritte Bereich 33 weist einen dritten Durchgang 29 mit einer Öffnung 17 am gegossenen Gehäuse 100 auf. Vorteilhaft kostengünstig kann der dritte Durchgang 29 eine mechanische Belastung eines Betriebs in der ersten oder zweiten Aufstellungsart in einer hohen Qualität erfindungsgemäß wie der zweite Durchgang 28 angepasst widerstehen.

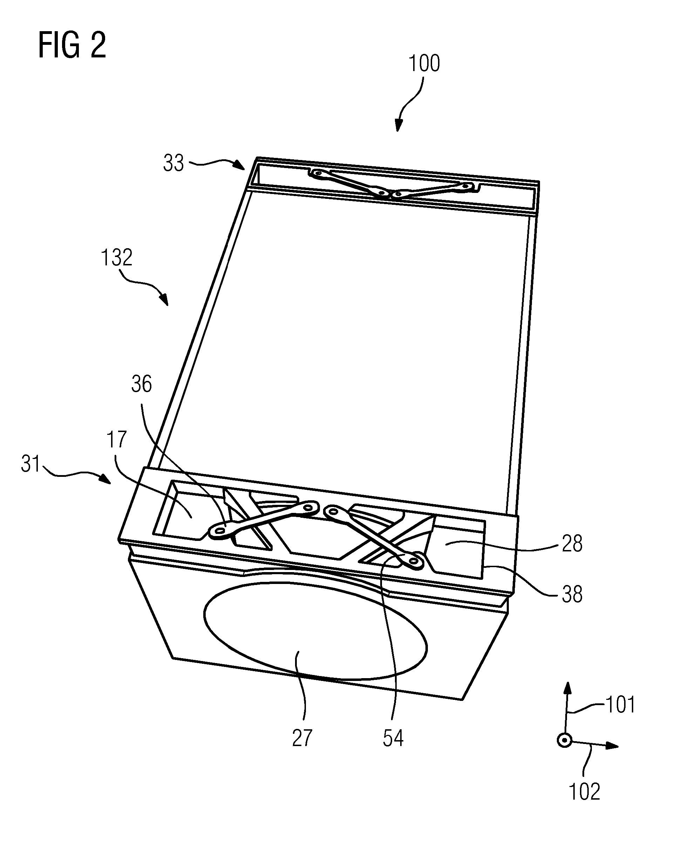

FIG 2 zeigt das Ausführungsbeispiel aus FIG 1 mit einem weiteren Versteifungselement 36, das von einem dritten Verbindungspunkt 46 zu einem vierten Verbindungspunkt 47 verläuft, wobei das weitere Versteifungselement 36 an der ersten und an der zweiten Befestigungsvorrichtung 51 und 52 befestigt ist. Bei dem gegossenen Gehäuse 100 verläuft außerdem ein zweites weiteres Versteifungselement 54 von dem siebten Verbindungspunkt 56 zu dem achten Verbindungspunkt 57, wobei das zweite weitere Versteifungselement 54 an der dritten Befestigungsvorrichtung 61 und an der vierten Befestigungsvorrichtung 62 befestigt ist. Das weitere Versteifungselement 36 und das zweite weitere Versteifungselement 54 sind einzelne Stahlstreben, die diagonal zwischen den Befestigungsvorrichtungen verlaufen. Die Stahlstreben weisen eine höhere Festigkeit als das gegossene Material des gegossenen Gehäuses 100 auf. Die Stahlstreben weisen vorteilhaft eine Querschnittsverschlankung außerhalb ihrer Befestigungsbereiche auf. Die Befestigungsbereiche der Metall/Stahlstreben weisen Bohrungen auf, die eine Schraubverbindung mit der ersten, zweiten, dritten und vierten Befestigungsvorrichtung ermöglichen. Zusätzlich oder alternativ zu einer Schraubverbindung können das weitere Versteifungselement 36 und das zweite weitere Versteifungselement 54 an ihren Befestigungsvorrichtungen formschlüssig fixiert sein. Hierzu können Bohrungen an den Befestigungsvorrichtungen 51, 52, 61, 62 und an dem weiteren Versteifungselement 36 und dem zweiten weiteren Versteifungselement 54 vorgesehen sein, in denen formschlüssig in einer Passung Stifte eingebracht werden, die zu einer formschlüssigen Fixierung des weiteren Versteifungselements 36 an der ersten Befestigungsvorrichtung 51 und an der zweiten Befestigungsvorrichtung 52 führen. Dies kann analog für das zweite weitere Versteifungselement 54 an der dritten Befestigungsvorrichtung 61 und an der vierten Befestigungsvorrichtung 62 durchgeführt werden. Die formschlüssige Fixierung mit den Stiften bewirkt bei einer dynamischen Belastung eine geringere relative Verschiebung des weiteren Versteifungselements 36 bzw. des zweiten weiteren Versteifungselements 54 relativ zu den Befestigungsvorrichtungen 51,52,61,62 als beispielsweise bei einer auf Scher-Lochleibung beanspruchten reinen Schraubverbindung.

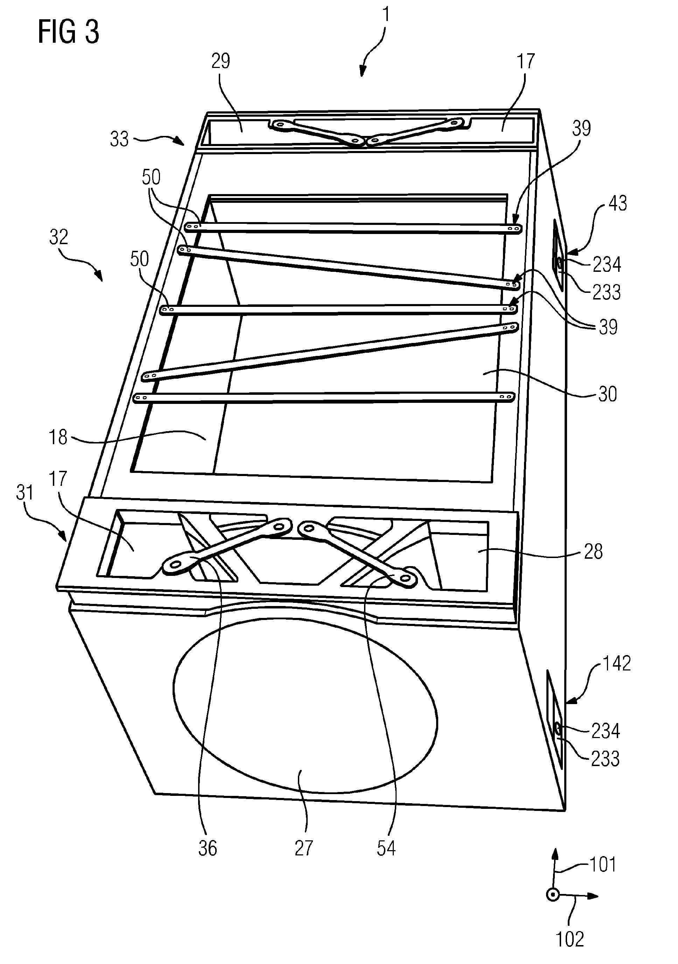

FIG 3 zeigt ein weiteres Ausführungsbeispiel eines gegossenen Gehäuses 1. Hier sind viele Merkmale mit denen im Ausführungsbeispiel des gegossenen Gehäuses 100 in FIG 1 und FIG 2 identisch. Diese identischen Merkmale sind im Rahmen der Beschreibung der FIG 1 und FIG 2 bereits aufgezeigt und weisen in FIG 3 keine oder dieselben Bezugszeichen auf. Gegenüber dem Ausführungsbeispiel der FIG 1 und FIG 2 weist das gegossene Gehäuse 1 einen weiteren Durchgang 30 im zweiten Bereich 32 mit einer Öffnung 18 am gegossenen Gehäuse 1 auf. Bei einer ersten Ausführungsart einer erfindungsgemäßen Maschine, insbesondere einer erfindungsgemäßen elektrischen Maschine, bei der ein Kühlmittelstrom, insbesondere Luft, durch die Öffnung 17 des zweiten Durchgangs 28 in das gegossene Gehäuse 1 einströmt und über die Öffnung 17 des dritten Durchgangs 29 aus dem gegossenen Gehäuse 1 ausströmt, wird die Öffnung 18 des weiteren Durchgangs 30 durch eine Platte verschlossen. Bei einer zweiten Ausführungsart einer erfindungsgemäßen Maschine, insbesondere einer erfindungsgemäßen elektrischen Maschine, ist die Platte nicht vorhanden, so dass durch die Öffnung 18 des weiteren Durchgangs 30 ein Kühlmittel, insbesondere Luft, in das gegossene Gehäuse 1 ein- oder ausströmen kann. Bei der zweiten Ausführungsart kann das Kühlmittel, insbesondere Luft, durch die Öffnungen 17 des zweiten und dritten Durchgangs 28,29 in eine erfindungsgemäße Maschine, insbesondere eine erfindungsgemäße elektrische Maschine, einströmen, kann den zweiten Bereich kühlen und über die Öffnung 18 des weiteren Durchgangs 30 ausströmen. Vorteilhaft kostengünstig kann das gegossene Gehäuse 1 für die zweite Aufstellungsart die auftretenden mechanischen Belastungen durch mehrere Stahlstreben 50, die in einer fachwerkartigen Struktur an der Öffnung 18 des weiteren Durchgangs 30 angeordnet und befestigt sind, in einer hohen Qualität widerstehen. Die Stahlstreben 50 sind mit Schrauben und Stiften an Befestigungsvorrichtungen 39 eines gegossenen Randes des weiteren Durchgangs 30 befestigt. Stützvorrichtungen für eine erste Aufstellungsart weisen an dem gegossenen Gehäuse 1 Ausnehmungen 233 mit Löchern 234 auf. Bei Bedarf können für einen bestimmten Aufstellungsort die Löcher 233 für Schrauben verwendet werden, damit das gegossene Gehäuse 1 an einer ersten Stützfläche 142 und an einer weiteren ersten Stützfläche 43 definiert für einen Betrieb in der ersten Aufstellungsart abgestützt ist. Hierfür befinden sich die Löcher 234 in der axialen Richtung innerhalb der ersten Stützfläche 142 bzw. der weiteren ersten Stützfläche 43.

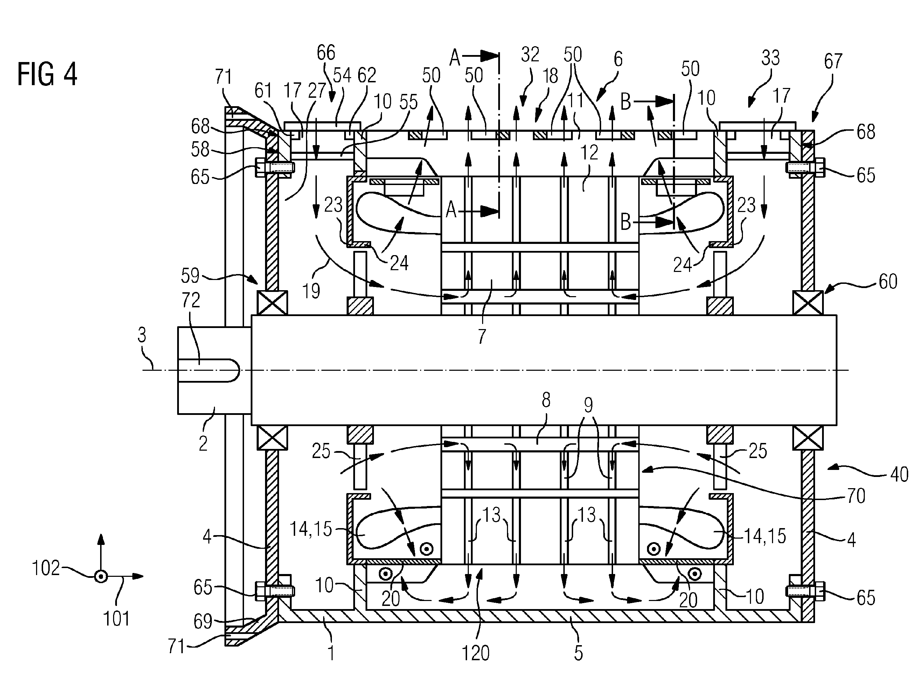

FIG 4 zeigt einen Längsschnitt durch ein Ausführungsbeispiel einer Maschine 40 in einer zweiten Ausführungsart mit dem gegossenen Gehäuse 1 gemäß dem Ausführungsbeispiel nach FIG 3. Die Maschine 40 umfasst das gegossene Gehäuse 1 und die durch den ersten Durchgang 27 verlaufende Welle 2, wobei an der Welle 2 ein Rotor 70 befestigt ist und in dem zweiten Bereich 32 des gegossenen Gehäuses 1 ein Stator 120 zum Zusammenwirken mit dem Rotor 70 fixiert ist, wobei das gegossene Gehäuse 1 das Versteifungselement 34 (in FIG 4 durch das zweite Versteifungselement 55 )verdeckt, die erste Befestigungsvorrichtung 51 und die zweite Befestigungsvorrichtung 52 umfasst (in FIG 4 ist die erste Befestigungsvorrichtung 51 und die zweite Befestigungsvorrichtung 52 durch die dritte Befestigungsvorrichtung 61 bzw. die vierte Befestigungsvorrichtung 62 verdeckt).

Bei einem Betrieb der Maschine 40 wird ein Rotor 70 in Drehung um die Drehachse 4 versetzt, die sich entlang der axialen Richtung 101 erstreckt, und es kann an einer Welle 2, an der der Rotor 70 befestigt ist, mechanische Energie an einen mechanischen Verbraucher in Form einer Drehbewegung abgegeben werden. Die dabei auftretenden Kräfte führen zu Gegenkräften in dem Stator 120, der im zweiten Bereich 32 fixiert ist. Bei einem Betrieb der Maschine 40 kann auch der Maschine 40 mechanische Energie über die Welle 2 zugeführt werden, die auch zu entsprechenden Gegenkräften am Stator 120 führt. Bei der Maschine 40 ist die Welle 2 mithilfe einer ersten Lagervorrichtung 59 in einem ersten Lagerschild und mithilfe einer zweiten Lagervorrichtung 60 in einem zweiten Lagerschild gelagert sein. Die erste Lagervorrichtung 59 und die zweite Lagervorrichtung 60 können hierfür jeweils ein Lager, z.B. Wälzlager, aufweisen. Das erste Lagerschild ist an dem ersten axialen Ende 66 des gegossenen Gehäuses 1 und das zweite Lagerschild an dem zweiten axialen Ende 67 des gegossenen Gehäuses 1 mit Schrauben 65 befestigt und bilden einen Teil von Stirnflächen 4, die die den ersten Durchgang 27 und einen entsprechenden Durchgang des dritten Bereiches 33 zum Teil verschließen.

Insbesondere vorteilhaft ist eine Anpassung einer elektrischen Maschine 40 an eine mechanische Belastung durch einen Betrieb der elektrischen Maschine 40 vorteilhaft kostengünstig in hoher Qualität möglich. Beim Betrieb der elektrischen Maschine 40 als Generator wird der Rotor 70 durch mechanische Energie in eine Drehung um die Drehachse 3 versetzt, die sich entlang der axialen Richtung 101 erstreckt. Durch ein magnetisches Zusammenwirken zwischen Rotor 70 und Stator 120 kann die mechanische Energie in elektrische Energie umgewandelt werden. Die elektrische Energie kann an einer Wicklung 14, die am Stator 120 befestigt ist, für einen elektrischen Verbraucher entnommen werden. Beim Betrieb einer erfindungsgemäßen elektrischen Maschine 40 als Motor wird über die Wicklung 14 elektrische Energie zugeführt und durch das magnetische Zusammenwirken zwischen Stator 120 und Rotor 70 elektrische Energie in mechanische Energie umgewandelt. Dabei wird der Rotor 70 in Drehung um die Drehachse 3 versetzt und es kann an einer Welle 2 mechanische Energie an einen mechanischen Verbraucher in Form einer Drehbewegung abgegeben werden. Der Rotor 70 ist an der Welle 2 befestigt und weist ein Läuferblechpaket 7 auf. Der Stator 120 weist ein Ständerblechpaket 12 auf. Vorteilhaft kann bei einer erfindungsgemäßen elektrischen Maschine der Stator 120 in dem zweiten Bereich 32 des gegossenen Gehäuses 1 eine erfindungsgemäße Anpassung an eine mechanische Belastung in einer Aufstellungsart durch einen Betrieb der elektrischen Maschine erreicht werden, wobei vorteilhaft kostengünstig in einer hohen Qualität das Fixieren des Stators 120 mit keiner oder einer geringen Veränderungen in den für das magnetische Zusammenwirken des Stators mit dem Rotor maßgeblichen Eigenschaften des Stators 42 erfolgt.

Hinsichtlich weiterer Merkmale, z.B. Aufbau, Betrieb und Kühlluftführung, der elektrischen Maschine 40 der FIG 4 und die damit verbundenen Effekte und Vorteile wird auf den Inhalt der der Patentschrift mit der Nummer EP 2 301 137 B1 Bezug genommen, deren Inhalt hiermit in dieser Anmeldung aufgenommen wird. Eine Zuordnung des Inhaltes des Textes und der Inhalte der FIG 1 bis FIG 3 der EP 2 301 137 B1 zu einer erfindungsgemäßen elektrischen Maschine 40 ist dadurch möglich, dass die FIG 4 dieser Erfindung aus der FIG 1 der EP 2 301 137 B1 entstanden ist. Das gegossene Gehäuse 1 kann auch in weiteren Ausführungsbeispielen eines gegossenen Gehäuses 1 oder einer Maschine 40 einen zweiten Bereich 32 mit einem Schnitt gemäß der FIG 2 der EP 2 301 137 B1 aufweisen. In der EP 2 301 137 B1 wird die Drehachse 3 als Wellenachse 3, die Welle 2 als Rotorwelle 2, die Wicklung als Ständerwicklung und die axiale Richtung 101 als Axialrichtung bezeichnet.

Das gegossene Gehäuse 1 weist die zweite Stützfläche 58 an einer axialen Außenfläche 68 einer axialen Wand 75 des gegossenen Gehäuses 1 auf. An dieser Stützfläche 58 ist eine Stützvorrichtung 69 mit einem Flansch angebracht. In dem Ausführungsbeispiel der FIG 4 hat die Stützvorrichtung 69 zusätzlich die Funktion des ersten Lagerschilds. Die Stützvorrichtung 69 ist an der axialen Außenfläche 68 an dem ersten axialen Ende 66 befestigt. In dem Ausführungsbeispiel der FIG 4 ist die Stützvorrichtung 69 an dem gegossenen Gehäuse 1 durch Schrauben 65 befestigt. An dem ersten axialen Ende 66 weist die Welle 3 eine Verbindungsvorrichtung 72 auf, mit der die elektrische Maschine 40 mechanische Energie an eine anzutreibende Vorrichtung abgeben kann oder von einer antreibenden Vorrichtung aufnehmen kann. Hierzu kann sich das gegossene Gehäuse 1 bzw. die elektrische Maschine 40 in einem Betrieb der elektrischen Maschine 40 in einer zweiten Aufstellungsart über die zweite Stützfläche 58 abstützen. So kann sich vorteilhaft kostengünstig in einer hohen Qualität das gegossene Gehäuse 1 bzw. die elektrische Maschine 40 nur über die zweite Stützfläche 58 an eine anzutreibende oder antreibende Vorrichtung in einem Betrieb der elektrischen Maschine 40 abstützen. In dem Ausführungsbeispiel gemäß FIG 4 kann die Stützvorrichtung 69 mit der elektrischen Maschine 40 mittels Schrauben durch die Bohrungen 71 an der anzutreibenden oder antreibenden Vorrichtung befestigt werden. Alternativ oder zusätzlich kann vorteilhaft für bestimmte Aufstellungsorte an dem zweiten axialen Ende 67 des gegossenen Gehäuses 1 anstelle des zweiten Lagerschilds vorteilhaft kostengünstig in einer hohen Qualität eine Stützvorrichtung angebracht werden, die ein Abstützen des gegossenen Gehäuses 1 bzw. der elektrischen Maschine 40 in einer zweiten oder einer weiteren Aufstellungsart ermöglicht.

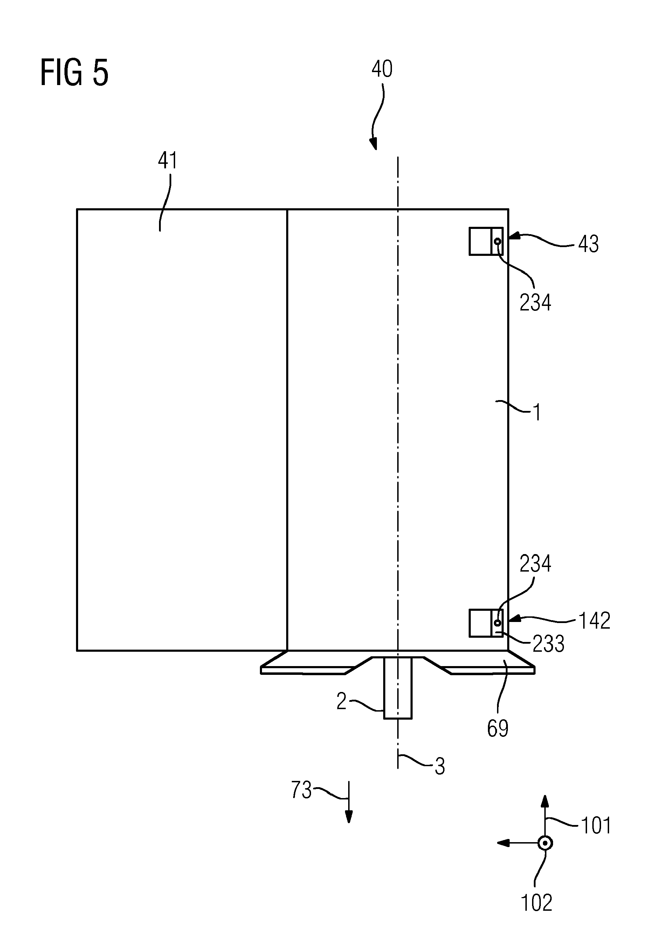

FIG 5 zeigt eine Ansicht des Ausführungsbeispiels der Maschine 40 gemäß FIG 4 mit einer vertikal orientierbaren Welle 2. Unter "vertikal" ist hier zu verstehen, dass die Welle 2, deren Drehachse 3 sich in der axialen Richtung 101 erstreckt, im Wesentlichen parallel zu einer Richtung 73 der Gewichtskraft verläuft, die in einem Erdschwerefeld auf die Maschine 40 wirkt. Eine erfindungsgemäße Maschine, insbesondere eine erfindungsgemäße elektrische Maschine, ist vorteilhaft kostengünstig in einer hohen Qualität bezüglich der Welle vertikal orientierbar, wenn bei einem erfindungsgemäßen gegossenen Gehäuse das weitere Versteifungselement 36 und/oder das zweite weitere Versteifungselement 54 in einem erfindungsgemäßen gegossenen Gehäuse eingebaut bzw. befestigt ist. So kann die Maschine 40 gemäß FIG 5 in einer zweiten Aufstellungsart montiert werden, bei der die Welle vertikal orientiert ist. Geringe Abweichungen zwischen der Richtung der vertikal orientierten Welle und der Richtung 73 der Gewichtskraft können z.B. daher resultieren, dass der Schwerpunkt der Maschine 40 nicht auf der Drehachse 3 liegt. Bei einer elektrischen Maschine 40 gemäß FIG 5 ist dies nur in geringem Maße der Fall, da vorteilhaft kostengünstig ein Kühlaufsatz 41 auf der elektrischen Maschine 40 im Vergleich zu der elektrischen Maschine 40, die den Stator 120 mit einer großen Masse aufweist, eine geringe Masse aufweist. Der Kühlaufsatz 41 hat Führungsvorrichtungen, die Kühlmittelströme aus den Öffnungen 17 des zweiten Durchgangs 28 und des dritten Durchgangs 29 und gegebenenfalls, wie bei dem Ausführungsbeispiel der FIG 4 der Öffnung 18 des weiteren Durchgangs 30, führen, um das Kühlmittel aus der elektrischen Maschine 40 abzuführen oder zuzuführen bzw. über Wärmetauscher abzukühlen.

Das gegossene Gehäuse 1 bzw. die Maschine 40 kann auch in einer ersten Aufstellungsart mit horizontal orientierter Welle sich in einem Betrieb der Maschine 40 über die erste Stützfläche 142 und die weitere erste Stützfläche 43 abstützen. Bei einer ersten Aufstellungsart mit im Wesentlichen horizontal orientierter Welle wirkt die Gewichtskraft in einer Richtung, die im Wesentlichen senkrecht zu der Drehachse 3 verläuft. Um die Maschine 40 gemäß FIG 5 mit einer horizontal orientierten Welle aufzustellen, können an dem gegossenen Gehäuse 1 an den Löchern 234 Füße angeschraubt werden. So stört die Stützvorrichtung 69 nicht bei einer Aufstellung der elektrischen Maschine 40 mit einer horizontal orientierten Welle 2. Alternativ dazu können auch vorteilhaft kostengünstig mit einer hohen Qualität entsprechende Füße an der ersten Stützfläche 142 und an der weiteren ersten Stützfläche 43 angegossen sein. Weiterhin alternativ dazu kann anstelle der Stützvorrichtung 69 eine Stützvorrichtung an dem gegossenen Gehäuse 1 befestigt sein, die unabhängig von einem ersten Lagerschild an dem ersten axialen Ende 66 der Maschine 40 befestigt werden kann.

Bei einem Ausführungsbeispiel eines Verfahrens zur Herstellung eines gegossenen Gehäuses 1 wird dieses mit dem Versteifungselement 34, dem zweiten Versteifungselement 55, der ersten Befestigungsvorrichtung 51 und der zweiten Befestigungsvorrichtung 52 durch ein Gießen in einem Stück hergestellt.

In einem Ausführungsbeispiel eines Verfahrens zur Herstellung der Maschine 40 mit einer Welle 2, insbesondere der elektrischen Maschine 40 mit der Welle 2, wird das gegossene Gehäuse 1, welches das Versteifungselement 34, die erste Befestigungsvorrichtung 51 und die zweite Befestigungsvorrichtung 52 umfasst, für einen Verfahrensschritt zur Herstellung der Maschine 40, insbesondere der elektrischen Maschine 40, bereitgestellt. In einem Verfahrensschritt kann abhängig von einer Bestellung eines Kunden anhand der von dem Kunden gewünschten Aufstellungsart das weitere Versteifungselement 36 und/oder das zweite weitere Versteifungselement 54 an dem gegossenen Gehäuse 1 befestigt oder weggelassen werden.

Bei einem Ausführungsbeispiel eines Verfahrens für einen Service an der Maschine 40 mit einer Welle 2, insbesondere der elektrischen Maschine 40 mit der Welle 2, werden bedarfsabhängig an einer Maschine 40, insbesondere einer elektrischen Maschine 40, in einem zeitlichen Abstand zu deren Herstellung ein weiteres Versteifungselement 36 und ein zweites weiteres Versteifungselement 54 an der ersten, zweiten bzw. dritten und vierten Befestigungsvorrichtung 51,52,61,62 befestigt oder entfernt.

Bei einem Ausführungsbeispiel einer Verwendung eines weiteren Versteifungselements 36, 54 werden das weitere Versteifungselement 36 und das zweite weitere Versteifungselement 54 an der ersten und zweiten bzw. dritten und vierten Befestigungsvorrichtung 51,52,61,62 befestigt.

Obwohl die Erfindung im Detail durch die bevorzugten Ausführungsbeispiele näher beschrieben wurde, ist sie nicht auf die offenbarten Beispiele beschränkt. Andere Variationen können vom Fachmann hieraus abgeleitet werden, ohne den Schutzumfang der Erfindung zu verlassen.

## Patentansprüche

1. Gegossenes Gehäuse (1,100) für eine Maschine (40) mit einer Welle (2), insbesondere für eine elektrische Maschine (40) mit einer Welle (2),
- wobei das gegossene Gehäuse in einer axialen Richtung (101) aufeinanderfolgend einen ersten Bereich (31), einen zweiten Bereich (32,132) und einen dritten Bereich (33) aufweist,
- wobei das gegossene Gehäuse einen ersten Durchgang (27) für die Welle (2) und einen zweiten Durchgang (28) umfasst,
- wobei der erste Durchgang (27) einen ersten gegossenen Rand (37) und der zweite Durchgang (28) einen zweiten gegossenen Rand (38) aufweist,
- wobei der zweite Durchgang (28) ein Versteifungselement (34) aufweist,
- wobei das Versteifungselement (34) von einem ersten Verbindungspunkt (44) mit dem zweiten gegossenen Rand (38) zu einem gegenüberliegenden zweiten Verbindungspunkt (45) mit dem zweiten gegossenen Rand (38) verläuft,
- wobei der zweite gegossene Rand (38) an einem dritten Verbindungspunkt (46) eine erste Befestigungsvorrichtung (51) und an einem vierten Verbindungspunkt (47) eine zweite Befestigungsvorrichtung (52) aufweist,
- wobei der zweite Durchgang (28) eine Öffnung (17) in einer Wand (74) des gegossenen Gehäuses aufweist,
- wobei sich eine Projektion einer gedachten Verbindungslinie (53) zwischen dem dritten Verbindungspunkt (46) und dem vierten Verbindungspunkt (47) in die Öffnung (17) mit einer Projektion des Versteifungselements (34) in die Öffnung (17) kreuzt.

2. Gegossenes Gehäuse (1,100) nach Anspruch 1, wobei das Versteifungselement (34) stoffschlüssig mit dem gegossenen Gehäuse (1,100) verbunden ist.

3. Gegossenes Gehäuse (1,100) nach Anspruch 1 oder 2, wobei ein weiteres Versteifungselement (36) von dem dritten Verbindungspunkt (46) zu dem vierten Verbindungpunkt (47) verläuft, wobei das weitere Versteifungselement (36) an der ersten Befestigungsvorrichtung (51) und an der zweiten Befestigungsvorrichtung (52) befestigt ist.

4. Gegossenes Gehäuse (1,100) nach einem der vorhergehenden Ansprüche, wobei das weitere Versteifungselement (36) an der ersten Befestigungsvorrichtung (51) und an der zweiten Befestigungsvorrichtung (52) formschlüssig fixiert ist.

5. Gegossenes Gehäuse (1,100) nach einem der vorhergehenden Ansprüche, wobei die erste Befestigungsvorrichtung (51) und die zweite Befestigungsvorrichtung (52) stoffschlüssig mit dem gegossenen Gehäuse (1,100) verbunden sind.

6. Gegossenes Gehäuse (1,100) nach einem der vorhergehenden Ansprüche, wobei ein zweites Versteifungselement (55) von einem fünften Verbindungspunkt (48) mit dem zweiten gegossenen Rand (38) zu einem gegenüberliegenden sechsten Verbindungspunkt (49) mit dem zweiten gegossenen Rand (38) verläuft, wobei der zweite gegossene Rand (38) an einem siebten Verbindungspunkt (56) eine dritte Befestigungsvorrichtung (61) und an einem achten Verbindungspunkt (57) eine vierte Befestigungsvorrichtung (62) aufweist, wobei sich eine Projektion einer zweiten gedachten Verbindungslinie (63) zwischen dem siebten Verbindungspunkt (56) und dem achten Verbindungspunkt (57) in die Öffnung (17) mit einer Projektion des zweiten Versteifungselements (55) in die Öffnung (17)kreuzt, wobei das Versteifungselement (34) und die zweite gedachte Verbindungslinie (63) in zueinander ähnlichen Richtungen orientiert sind und das zweite Versteifungselement (55) und die gedachte Verbindungslinie (53) in zueinander ähnlichen Richtungen orientiert sind.

7. Gegossenes Gehäuse (1,100) nach einem der vorhergehenden Ansprüche, wobei sich eine Öffnung (17) des zweiten Durchgangs (28) am gegossenen Gehäuse (1,100) in der axialen Richtung (101) überwiegend innerhalb einer ersten Stützfläche (42,142) des gegossenen Gehäuses (1,100) erstreckt.

8. Gegossenes Gehäuse (1,100) nach einem der vorhergehenden Ansprüche, wobei sich eine Öffnung (17) des zweiten Durchgangs (28) am gegossenen Gehäuse (1,100) in der axialen Richtung (101) überwiegend zwischen einer zweiten Stützfläche (58) und dem zweiten Bereich (32,132) erstreckt.

9. Gegossenes Gehäuse (1,100) nach Anspruch 8, wobei das gegossene Gehäuse (1,100) die zweite Stützfläche (58) an einer axialen Außenfläche (68) einer axialen Wand (75) des gegossenen Gehäuses (1,100) aufweist.

10. Gegossenes Gehäuse (1,100) nach einem der vorhergehenden Ansprüche, wobei sich der zweite Durchgang (28) in dem ersten Bereich (31) befindet.

11. Maschine (40), insbesondere elektrische Maschine (40) umfassend ein gegossenes Gehäuse (1,100) nach einem der vorhergehenden Ansprüche, wobei die Maschine (40), insbesondere die elektrische Maschine (40), die durch den ersten Durchgang (27) verlaufende Welle (2) umfasst, wobei an der Welle (2) ein Rotor (70) befestigt ist und in dem zweiten Bereich (32,132) des gegossenen Gehäuses (1,100) ein Stator (120) zum Zusammenwirken mit dem Rotor (70) fixiert ist, wobei das gegossene Gehäuse (1,100) das Versteifungselement (34), die erste Befestigungsvorrichtung (51) und die zweite Befestigungsvorrichtung (52) umfasst.

12. Verfahren zur Herstellung eines gegossenen Gehäuses (1,100) nach einem der Ansprüche 1 bis 10, wobei das gegossene Gehäuse (1,100) mit dem Versteifungselement (34), der ersten Befestigungsvorrichtung (51) und der zweiten Befestigungsvorrichtung (52) hergestellt wird.

13. Verfahren zur Herstellung einer Maschine (40) mit einer Welle (2), insbesondere einer elektrischen Maschine (40) mit einer Welle (2), nach Anspruch 11, wobei das gegossene Gehäuse (1,100), welches das Versteifungselement (34), die erste Befestigungsvorrichtung (51) und die zweite Befestigungsvorrichtung (52) umfasst, bereitgestellt wird.

14. Verfahren für einen Service an einer Maschine (40) mit einer Welle (2), insbesondere an einer elektrischen Maschine (40) mit einer Welle (2), nach Anspruch 11, wobei das gegossene Gehäuse (1,100) das Versteifungselement (34), die erste Befestigungsvorrichtung (51) und die zweite Befestigungsvorrichtung (52) umfasst und ein weiteres Versteifungselement (36) an der ersten Befestigungsvorrichtung (51) und an der zweiten Befestigungsvorrichtung (52) befestigt wird oder entfernt wird.

15. Verwendung eines weiteren Versteifungselementes (36) zu einem Versteifen eines gegossenen Gehäuses (1,100) nach einem der Ansprüche 1 bis 10, insbesondere eines gegossenen Gehäuses (1,100) einer Maschine (40) nach Anspruch 11, wobei das gegossene Gehäuse (1,100) das Versteifungselement (34), die erste Befestigungsvorrichtung (51) und die zweite Befestigungsvorrichtung (52) umfasst und das weitere Versteifungselement (36) an der ersten Befestigungsvorrichtung (51) und an der zweiten Befestigungsvorrichtung (52) befestigt wird.
